# EUROPÄISCHE PATENTANMELDUNG

(11) **EP 0 612 642 A1**
(43) Veröffentlichungstag der Anmeldung: **31.08.1994**
(21) Anmeldenummer: 94102624.7
(22) Anmeldetag: 22.02.1994
(51) Int. Cl.: B60K 41/22, F16H 63/44

(54) **Verfahren und Vorrichtung zum Gangwechsel bei einem mechanischen Stufengetriebe mit einem Hauptgetriebe und wenigstens einem Vorgelege**

(30) Priorität: 25.02.1993 DE 4305762
(71) Anmelder: ZF FRIEDRICHSHAFEN Aktiengesellschaft, D-88038 Friedrichshafen (DE)
(72) Erfinder: Döbele, Bernd, D-88682 Salem (DE)

(57) **Zusammenfassung**

Bei einem Verfahren zum Gangwechsel bei einem mechanischen Stufengetriebe mit einem Hauptgetriebe und wenigstens einem Vorgelege (3) und mit einer Kupplungsscheibe (1), die über einen automatisch geschalteten Splitter (8) mit der Hauptwelle (9) verbunden wird, wobei die Zahnräder (11, 12 und 4, 5, 6, 7) des Hauptgetriebes und des Vorgeleges (3) beim Schaltvorgang synchronisiert werden, wird bei einem Gangwechsel in einem ersten Schritt der Splitter (8) in eine Neutralstellung gebracht, in der die Kupplungsscheibe (1) von der Hauptwelle (9) abgekoppelt wird, wonach die Synchronisierung der Zahnräder (4, 5, 6, 7) des Vorgeleges (3) und anschließend die Wiedereinkoppelung des Splitters (8) erfolgt.

## Beschreibung

Die Erfindung betrifft ein Verfahren zum Gangwechsel bei einem mechanischen Stufengetriebe mit einem Hauptgetriebe und wenigstens einem Vorgelege und mit einer Kupplungsscheibe, die über einen automatisch geschalteten Splitter mit dem Vorgelege verbunden wird, wobei die Zahnräder des Hauptgetriebes und des Vorgeleges beim Schaltvorgang synchronisiert werden. Außerdem betrifft die Erfindung ein mechanisches Stufengetriebe zur Durchführung des Verfahrens.

Bei sogenannten 16-Gang-Getrieben, wobei durch einen zusätzlichen Schalthebel z. B. Gangsprunghalbierungen vorgenommen werden können, werden Getriebe mit einer Vorschaltgruppe bzw. einem Vorgelege verwendet. Ein sogenannter Splitter übernimmt dabei bei einem Wechsel der Gangstellung im Hauptgetriebe die entsprechende Umschaltung.

Ein Getriebe dieser Art ist insbesondere dort geeignet, wo ein großer Übersetzungsbereich mit kleinen Gangabstufungen verlangt wird. Auf diese Weise werden gute Fahrleistungen bei hoher Wirtschaftlichkeit erreicht. Die vorgeschaltete, sogenannte Splitgruppe verdoppelt bzw. splittet die Gangzahl des Hauptgetriebes.

Der Radaufbau in der Vorschaltgruppe bzw. der Splitgruppe ergibt eine zweite konstante Eingangsübersetzung, und zwar zusätzlich zu der im Hauptgetriebe vorhandenen. Die Antriebswelle wird wechselweise mit der konstanten Eingangsübersetzung in der Splitguppe oder im Hauptgetriebe verbunden.

Bei einer direkten Ansteuerung der Gangsynchronisierung, wobei z. B. die Schaltschiene eine Kolbenstange ist, führt dies häufig zu Anordnungs- bzw. Platzproblemen bezüglich der Zylinderdurchmesser für die erforderlichen Schaltkräfte. Aufgrund der erforderlichen Schaltkräfte, um die vorhandenen Massen bei einer Synchronisierung zu bewegen, ist es erforderlich, alle daran beteiligten Teile und Einrichtungen entsprechend stark zu dimensionieren. Dies gilt z. B. auch für die Synchronpakete der Gänge.

Der vorliegenden Erfindung liegt die Aufgabe zugrunde, ein Verfahren zum Gangwechsel bei einem mechanischen Stufengetriebe der eingangs erwähnten Art und ein mechanisches Stufengetriebe zur Durchführung des Verfahrens zu schaffen, wobei für einen Gangwechsel geringere Schaltkräfte erforderlich sind.

Erfindungsgemäß wird diese Aufgabe dadurch gelöst, daß bei einem Gangwechsel in einem ersten Schritt der Splitter in eine Neutralstellung gebracht wird, in der die Kupplungsscheibe von der Hauptwelle abgekoppelt wird, wonach die Synchronisierung der Zahnräder des Vorgeleges und anschließend die Wiedereinkoppelung des Splitters erfolgt.

Durch die erfindungsgemäße Verfahrensweise ist es lediglich erforderlich, daß die Synchronisierung des Hauptgetriebes das Massenträgheitsmoment der Vorgelegewelle mit den darauf angeordneten Zahnrädern synchronisiert. Dadurch, daß der Splitter während des Synchronisiervorganges in Neutralstellung gestellt wird, läßt sich das Massenträgheitsmoment der Kupplungsscheibe abkoppeln, so daß wesentlich weniger Getriebemassen beschleunigt werden müssen.

Durch das erfindungsgemäße Verfahren sind insgesamt auch deutlich kleinere Kräfte für eine Gangsynchronisierung erforderlich. Auf diese Weise kann z. B. der Schaltzylinder auf der Schaltschiene angeordnet werden. Darüber hinaus sind deutlich kleinere Synchronpakete für die Gänge erforderlich.

Als weiterer bedeutender Vorteil des erfindungsgemäßen Verfahrens kommt hinzu, daß durch die Neutralstellung des Splitters während des Synchronisiervorganges das bekannte Problem einer "ratschenden" Splitterstellung nicht mehr auftritt, da ja das Durchschalten unter Vorspannkraft erfindungsgemäß nunmehr ausgeschlossen ist.

In der Praxis hat sich überraschenderweise herausgestellt, daß durch diese Verzögerung im Gangwechsel durch die zwischengeschaltete Neutralstellung des Splitters keine spürbare Schaltzeitverlängerung auftritt. Es kommt zu keiner wesentlichen negativen Funktionsbeeinflussung der Schaltung.

Erst wenn die Gangendstellung im Hauptgetriebe geschaltet ist, wird der Splitter wieder aus der Neutralstellung geschaltet. Dabei kann der Splitter in die Ausgangsstellung zurückgeschaltet oder durch eine gleichzeitig erfolgte Änderung am Schalthebel auch in seine neue Position durchgeschaltet werden. Praktisch wird erfindungsgemäß nunmehr eine zweistufige Synchronisierung bei einem Schaltvorgang durchgeführt. Jeder Gangwechsel erfolgt bei einer Splitterstellung in Neutralposition, wobei auch die Kupplungsscheibe abgetrennt ist. Erst bei einer Rückmeldung bezüglich eines vollendeten Gangwechsels beginnt der Splitter, die Kupplungsscheibe zu synchronisieren und schaltet erst dann durch.

Da die Synchronisierung des Splitters pneumatisch erfolgen kann, wird dem Fahrer die erforderliche Schaltkraft zur Synchronisation der Kupplungsscheibe abgenommen. Gleichzeitig können aufgrund der deutlich geringeren zu bewegenden Massen auch die für einen Schaltvorgang erforderlichen Teile entsprechend schwächer und damit kleiner dimensioniert werden.

Ein mechanisches Stufengetriebe zur Durchführung des erfindungsgemäßen Verfahrens kann darin bestehen, daß der Splitter bei einem Gangwechsel über eine Schalteinrichtung in eine Neutralstellung schaltbar ist, in der die Kupplungsscheibe von der Hauptwelle abgekoppelt ist und daß der Splitter nach der Synchronisierung wieder ankoppelbar ist.

Eine derartige Einrichtung läßt sich mit geringem Aufwand und geringen Kosten durchführen. So kann z. B. der Schaltzylinder für den Splitter, der bisher im allgemeinen als doppelt wirkender Zylinder mit zwei Endstellungen ausgebildet war, einen Drei-Stellungs-Zylinder in kombinierter oder aufgelöster Bauweise ersetzt werden.

Zur Betätigung des Schaltzylinders für den Splitter kann ein zusätzliches Schaltventil verwendet werden, das die Neutralposition für den Splitter definiert.

Das Schaltventil kann z. B. als 4/2-Wege-Ventil ausgebildet sein.

Die Steuerung des Schaltventiles kann z. B. über einen Schalter erfolgen, der über die Drehwellenschaltung gesteuert wird.

In vorteilhafter Weise wird man zur Rückmeldung über eine Gangposition eine Rückmeldesignaleinrichtung vorsehen.

Vorteilhafte Ausgestaltungen und Weiterbildungen der Erfindung ergeben sich aus den weiteren Unteransprüchen und aus den nachfolgend anhand der Zeichnungen prinzipmäßig beschriebenen Ausführungsbeispielen. Es zeigt:
- Fig. 1 und 2:: einen Schaltvorgang nach dem Stand der Technik für einen Gangwechsel vom zweiten in den ersten Gang;
- Fig. 3 und 4:: Schaltvorgänge nach der Erfindung für einen Gangwechsel vom zweiten in den ersten Gang;
- Fig. 5:: eine schematische Darstellung eines Gangwechsels in fünf Schritten;
- Fig. 6:: einen Schaltplan für eine Gangsynchronisierung.

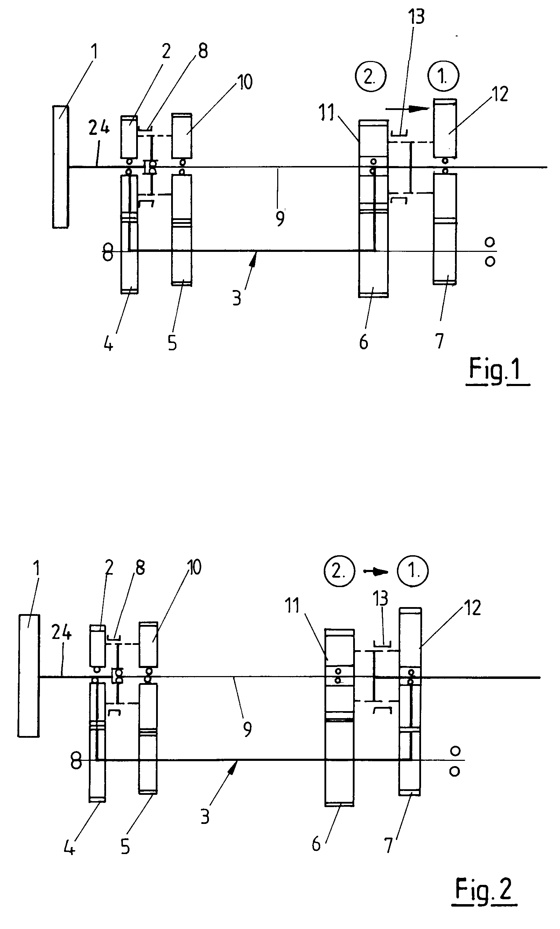

Aus den Fig. 1 und 2 ist der Ablauf eines Gangwechsels nach dem Stand der Technik ersichtlich. Der Kraftflußverlauf ist dabei jeweils durch eine dickere Darstellung der prinzipmäßig dargestellten Teile des Getriebes ersichtlich.

Gemäß Fig. 1 erfolgt der Kraftfluß von einer Kupplungsscheibe 1 und einer Antriebswelle 24 aus über ein erstes Zahnrad 2 auf ein Vorgelege 3 mit den darauf angeordneten Zahnrädern 4, 5, 6 und 7. Hierzu ist z. B. ein Splitter 8 entsprechend nach links für eine Koppelung des Zahnrades 2 mit der Vorgelegewelle geschaltet. Ein weiteres Zahnrad 10 läuft lose mit. Ein Zahnrad 11 auf der Hauptwelle 9 stellt den zweiten Gang und ein Zahnrad 12 auf der Hauptwelle 9 stellt den ersten Gang dar.

Gemäß Fig. 1 ist entsprechend der Stellung einer Schalt- und Synchronisiereinrichtung 13 der zweite Gang über das Vorgelege 3 geschaltet. Soll nun vom zweiten in den ersten Gang zurückgeschaltet werden, wobei der Kraftflußverlauf wiederum über das Vorgelege 3 erfolgen soll, so wird die Schalt- und Synchronisiereinrichtung 13 entsprechend nach rechts verschoben, bis das Zahnrad 12 für den ersten Gang und das Zahnrad 7 des Vorgeleges 3 miteinander gekoppelt sind. Die Position des Splitters 8 bleibt dabei unverändert.

In der Fig. 2 ist die vollzogene Gangschaltung dargestellt.

Wie aus den beiden Fig. 1 und 2 ersichtlich ist, muß ten für diesen Gangwechsel alle Getriebeteile und auch die Kupplungsscheibe 1 mit einem entsprechenden Kraftaufwand synchronisiert werden.

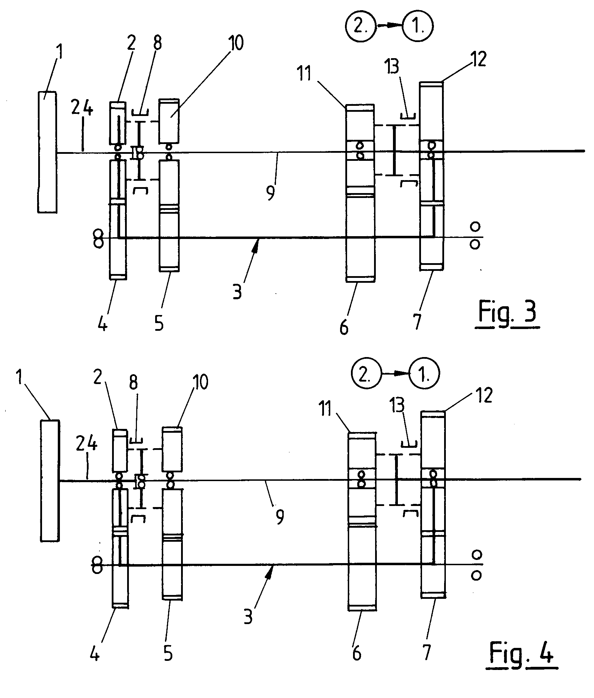

Derselbe Gangwechselvorgang nach dem erfindungsgemäßen Verfahren ist aus den Fig. 3 und 4 ersichtlich. Vor Beginn des Gangwechsels vom zweiten auf den ersten Gang wird der Splitter 8 in die Neutralstellung zwischen die beiden Zahnräder 2 und 10 geschaltet, und erst dann wird die Schalt- und Synchronisiereinrichtung 13 vom Zahnrad 11 zur Ankoppelung mit dem Zahnrad 12 verbunden. Diese Konstruktion ist in der Fig. 3 dargestellt. Wie ersichtlich, sind für diesen Schaltvorgang lediglich das Zahnrad 2 und die Zahnräder des Vorgeleges 3 zusammen mit dem Zahnrad 12 synchronisiert worden.

Gemäß Darstellung in Fig. 4 wird erst nach Abschluß des Gangwechsels der Splitter 8 in seine Ausgangsposition nach links, d. h. für eine Verbindung mit dem Zahnrad 2, zurückgeschaltet. Erst zu diesem Zeitpunkt erfolgt eine Synchronisierung der Antriebswelle 24 und der Kupplungsscheibe 1.

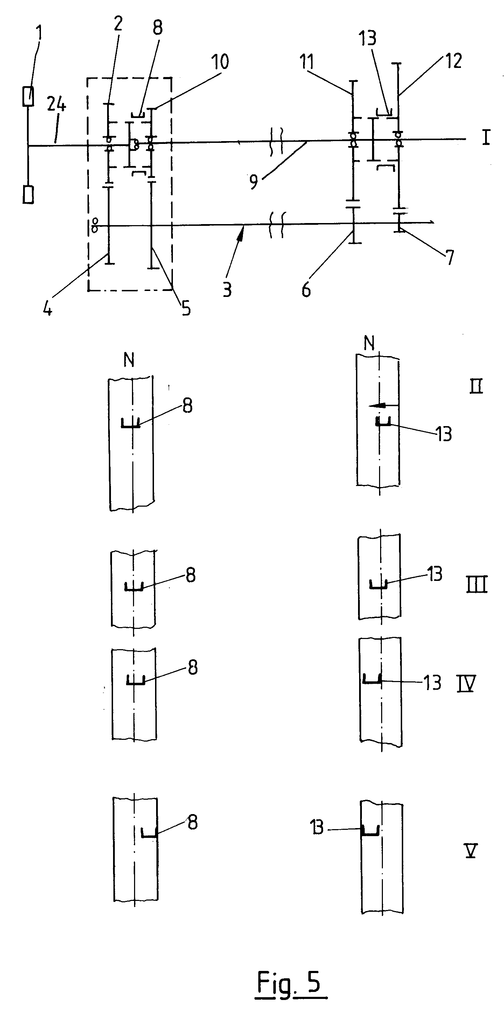

In der Fig. 5 ist prinzipmäßig in fünf Schritten nochmals ein Schaltvorgang bezüglich der jeweiligen Positionen des Splitters 8 und der Schalt- und Synchronisiereinrichtung 13 dargestellt. Erläutert wird dabei nachfolgend ein Schaltvorgang vom Zahnrad 12 auf das Zahnrad 11, wobei der Splitter 8 in seiner Position nach einem Gangwechsel nicht verändert sein soll. Schritt I stellt die Ausgangslage dar.

Im Schritt II wird der Hauptgetriebegang 12 manuell ausgeschaltet. Ab einem vorgewählten Ausschaltweg, bei dem die Kuppelverzahnung dieses Ganges außer Eingriff kommt, wird der Splitter 8 auf die Position "Splitter neutral" gestellt.

Im Schritt III erfolgt die Synchronisierung des Hauptgetriebes der Zahnräder 4 bis 7 und der Vorgelegewelle, und zwar ohne Synchronisierung der Antriebswelle 24 und der Kupplungsscheibe 1.

Im Schritt IV ist das Hauptgetriebe synchronisiert. Der Gang schaltet durch zur Ankoppelung des Zahnrades 11. Bis zum Erreichen des Eingriffs der Kuppelverzahnung für diesen Gang bleibt die Splitterstellung "neutral".

Gemäß Darstellung des Schrittes V wird erst ab Erreichen der Eingriffstellung, d. h. wenn der Hauptgetriebegang 11 eingelegt ist, der Splitter 8 wieder aus der Neutralposition nach rechts zur Koppelung mit dem Zahnrad 10 verschoben, wobei zuvor die Synchronisierung der Antriebswelle 24 mit der Kupplungsscheibe 1 erfolgt.

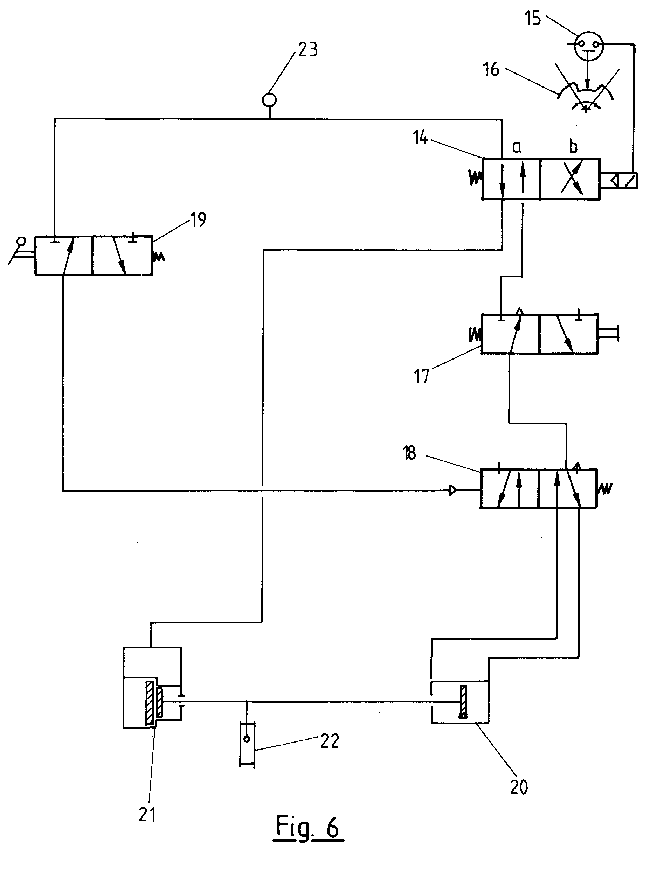

In der Fig. 6 ist ein Schaltplan zur Durchführung des erfindungsgemäßen Gangwechsels dargestellt. Ein 4/2-Wege-Ventil ist als Schaltventil 14 für die drei Stellungen des Splitters vorgesehen. Das Schaltventil 14 wird von einem Schalter 15 aus gesteuert, der von der Stellung der Drehwelle 16 zur Schaltung der Gänge betätigt wird. Bei einem geschalteten Gang ist der Schalter 15 geschlossen.

Weiterhin ist ein Auslöseventil 17 vorgesehen, das durch Drücken der Kupplung betätigt wird. Das Auslöseventil 17 läßt das von einer Druckmittelquelle 23 stammende Druckmittel erst dann durch, wenn das Kupplungspedal betätigt, d. h. wenn ausgekuppelt, ist. Ein Wechselventil 18 hat die Aufgabe, die Splitterstellung in die beiden Endstellungen entsprechend der Vorgabe des Schalthebels von langsam auf schnell zu wechseln. Hierzu dient ein Vorwählventil 19, das mit dem Wechselventil 18 verbunden und am Schalthebel angeordnet ist. Ein Zylinder 20 dient zum Wechseln der Splitterstellung in seine beiden Endpositionen. Ein Zylinder 21 ist für die Stellung "Splitter neutral" vorgesehen. Eine Schaltmuffe 22 ist mit den Zylindern 20 und 21 zur Positionierung des Splitters verbunden.

Der erfindungsgemäße Gangwechsel funktioniert nun auf folgende Weise:
Das Schaltventil 14 wird von dem Schalter 15 über die Drehwellenschaltung bzw. Positionierung gesteuert. Ist das Getriebe nicht kraftschlüssig geschaltet, d. h. im Bereich zwischen den Gängen und im Neutralbereich, bewirkt die Stellung des Schaltventiles 14, daß der Splitter auf "neutral" positioniert wird (siehe die in der Fig. 6 dargestellte Position). Der Zylinder 20 ist drucklos. Erst bei eingelegtem Hauptgetriebegang kann die Neutralstellung des Splitters verlassen werden. Solange sich das Schaltventil 14 in der dargestellten Position a befindet, wird der von der Druckmittelquelle 23 kommende Vorrat zu dem Neutralstellungszylinder 21 geleitet.

Wechselt nun das Schaltventil 14 in die Stellung b, was nur bei einem eingeschalteten Gang möglich ist, so erfolgt die Zuleitung von Druckmittel über das Auslöseventil 17 und das Wechselventil 18 zu dem Zylinder 20. Erst zu diesem Zeitpunkt wird der Splitter aus seiner Neutralstellung in seine Ausgangsposition oder in die andere Position, sofern dieser Positionswechsel gleichzeitig mitgewählt wird, geschaltet.

### Bezugszeichen

- 1: Kupplungsscheibe
- 2: Zahnrad
- 3: Vorgelege
- 4: Zahnrad
- 5: Zahnrad
- 6: Zahnrad
- 7: Zahnrad
- 8: Splitter
- 9: Hauptwelle
- 10: Zahnrad
- 11: Zahnrad
- 12: Zahnrad
- 13: Synchronisiereinrichtung
- 14: Schaltventil
- 15: Schaltventil
- 16: Drehwelle
- 17: Auslöseventil
- 18: Wechselventil
- 19: Vorwählventil
- 20: Drei-Stellungs-Schaltzylinder
- 21: Drei-Stellungs-Schaltzylinder
- 22: Schaltmuffe
- 23: Druckmittelquelle
- 24: Antriebswelle

## Patentansprüche

1. Verfahren zum Gangwechsel bei einem mechanischen Stufengetriebe mit einem Hauptgetriebe und wenigstens einem Vorgelege und mit einer Kupplungsscheibe, die über einen automatisch geschalteten Splitter mit dem Vorgelege verbunden wird, wobei die Zahnräder des Hauptgetriebes und des Vorgeleges beim Schaltvorgang synchronisiert werden, dadurch **gekennzeichnet,** daß bei einem Gangwechsel in einem ersten Schritt der Splitter (8) in eine Neutralstellung gebracht wird, in der die Kupplungsscheibe (1) von der Hauptwelle (9) abgekoppelt wird, wonach die Synchronisierung der Zahnräder (4, 5, 6, 7) des Vorgeleges (3) und anschließend die Wiedereinkoppelung des Splitters (8) erfolgt.

2. Mechanisches Stufengetriebe zur Durchführung des Verfahrens nach Anspruch 1 mit einem Hauptgetriebe und wenigstens einem Vorgelege und mit einer Kupplungsscheibe, die über einen Splitter mit dem Vorgelege verbindbar ist, wobei die Zahnräder des Hauptgetriebes und des Vorgeleges mit Synchronisiereinrichtungen versehen sind, dadurch **gekennzeichnet,** daß der Splitter (8) bei einem Gangwechsel über eine Schalteinrichtung (14, 15) in eine Neutralstellung schaltbar ist, in der die Kupplungsscheibe (1) von der Hauptwelle (9) abgekoppelt ist, und daß der Splitter (8) nach der Synchronisierung wieder ankoppelbar ist.

3. Mechanisches Stufengetriebe nach Anspruch 2, dadurch **gekennzeichnet,** daß die Schalteinrichtung einen Drei-Stellungs-Schaltzylinder (20, 21) für den Splitter (8) in kombinierter oder aufgelöster Bauweise aufweist.

4. Mechanisches Stufengetriebe nach Anspruch 2 oder 3, dadurch **gekennzeichnet,** daß für den Splitter (8) ein zusätzliches Schaltventil (14) vorgesehen ist.

5. Mechanisches Stufengetriebe nach Anspruch 4, dadurch **gekennzeichnet,** daß das Schaltventil (14) als 4/2-Wege-Ventil ausgebildet ist.

6. Mechanisches Stufengetriebe nach Anspruch 4 oder 5, dadurch **gekennzeichnet,** daß das Schaltventil (14) von einem Schalter (15) gesteuert ist, der über die Drehwelle (10) des Getriebes betätigbar ist.

7. Mechanisches Stufengetriebe nach einem der Ansprüche 2 bis 6, dadurch **gekennzeichnet,** daß zur Anzeige der Stellung des Splitters (8) eine Rückmeldesignaleinrichtung vorgesehen ist.

8. Mechanisches Stufengetriebe nach einem der Ansprüche 2 bis 7, dadurch **gekennzeichnet,** daß zur Rückmeldung über eine Gangposition eine Rückmeldesignaleinrichtung vorgesehen ist.
